# EUROPEAN PATENT APPLICATION

(11) **EP 1 231 665 A2**
(43) Date of publication of application: **14.08.2002**
(21) Application number: 02075111.1
(22) Date of filing: 14.01.2002
(51) Int. Cl.: H01M 8/06, C01B 3/38, C01B 3/32

(54) **Estimate of reformate composition**

(30) Priority: 07.02.2001 US 778370
(71) Applicant: Delphi Technologies, Inc., Troy, MI 48007 (US)
(72) Inventor: Haller, James Michael, Pittsford, NY 14534 (US); Noetzel, John, Fairport, NY 14450 (US); Grieve, Malcolm James, Fairport, NY 14450 (US)
(74) Representative: Denton, Michael John

(57) **Abstract**

A system (10) and method for modeling a reformate composition in an electric power system (10). The electric power system (10) may include a reformer, which produces a reformate (102), and an electrochemical cell, which utilizes the reformate (102) to generate electricity. The system (10) and method. comprise: a reformer temperature sensor, which generates a reformer temperature signal representative of a reformer temperature; an airflow sensor, which generates an airflow signal (122) representative of a measured airflow to the reformer; and a controller (30) configured to receive the abovementioned signals. The controller (30) performs the modeling and generates an estimate of the reformate (102) composition, where the estimate is responsive to at least one of the reformer temperature signal, the fuel flow signal (120), and the airflow signal (122).

## Description

### TECHNICAL FIELD

The present disclosure relates to evaluating the composition of reformate for a solid oxide fuel cell power system.

### BACKGROUND

Alternative transportation fuels have been represented as enablers to reduce toxic emissions in comparison to those generated by conventional fuels. At the same time, tighter emission standards and significant innovation in catalyst formulations and engine controls has led to dramatic improvements in the low emission performance and robustness of gasoline and diesel engine systems. This has certainly reduced the environmental differential between optimized conventional and alternative fuel vehicle systems. However, many technical challenges remain to make the conventionally-fueled internal combustion engine a nearly zero emission system having the efficiency necessary to make the vehicle commercially viable.

Alternative fuels cover a wide spectrum of potential environmental benefits, ranging from incremental toxic and carbon dioxide (CO₂) emission improvements (reformulated gasoline, alcohols, LPG, etc.) to significant toxic and CO₂ emission improvements (natural gas, DME, etc.). Hydrogen is clearly the ultimate environmental fuel, with potential as a nearly emission free internal combustion engine fuel (including CO₂ if it comes from a non-fossil source). Unfortunately, the market-based economics of alternative fuels, or new power train systems, are uncertain in the short to mid-term.

The automotive industry has made very significant progress in reducing automotive emissions in both the mandated test procedures and the "real world". This has resulted in some added cost and complexity of engine management systems, yet those costs are offset by other advantages of computer controls: increased power density, fuel efficiency, drivability, reliability, and real-time diagnostics.

Future initiatives to require zero emission vehicles appear to be taking us into a new regulatory paradigm where asymptotically smaller environmental benefits come at a very large incremental cost. Yet, even an "ultra low emission" certified vehicle can emit high emissions in limited extreme ambient and operating conditions, with failed, or degraded components.

One approach to addressing the issue of emissions is the employment of electrochemical cells or fuel cells, particularly solid oxide-fuel cells ("SOFC"), in an automobile. A fuel cell is an energy conversion device that generates electricity and heat by electrochemically combining a gaseous fuel, such as hydrogen, carbon monoxide, or a hydrocarbon, and an oxidant, such as air or oxygen, across an ion-conducting electrolyte. The fuel cell converts chemical energy into electrical energy.

A SOFC may be used in conjunction with a reformer that converts a fuel to hydrogen and carbon monoxide (the reformate) usable by the fuel cell. Three types of reformer technologies are typically employed (steam reformers, dry reformers, and partial oxidation reformers) to convert hydrocarbon fuel (methane, propane, natural gas, gasoline, etc.) to hydrogen using water, carbon dioxide, and oxygen, respectfully, with byproducts including carbon dioxide and carbon monoxide, accordingly. These reformers typically operate at high temperatures. At lower temperatures, e.g., during startup, deposition of carbon (or soot) upon the catalyst can adversely affect the reformer efficiency and reduce reformer life. Major requirements for the reformers are rapid start, dynamic response time, fuel conversion efficiency, size, and weight.

A SOFC may also be used in conjunction with a waste energy recovery unit (WER). A typical WER may by employed for example, as a combustor to provide additional heating, to preheat the SOFC, or just to burn excess fuel vapor. In a typical configuration, a SOFC may be combined with a WER in a manner that allows the WER to interface between a reformer and a SOFC, thereby directing the flow of reformate to the SOFC.

Various methods of evaluating the quality of the reformate delivered to the SOFC have been utilized. These methods typically include direct sensor measurements of the characteristics of the input and exhaust of the reformer, SOFC or both. Such a configuration however, require the use of expensive sensors or apparatus to make the necessary evaluations.

What is needed in the art then, is a method of evaluating reformate quality or composition without employing expensive or prohibitive sensors and apparatuses.

### SUMMARY

A system and method for modeling a reformate composition in an electric power system. The electric power system may include a reformer, which produces a reformate, and an electrochemical cell, which utilizes the reformate to generate electricity. The system and method comprise: a reformer temperature sensor, which generates a reformer temperature signal representative of a reformer temperature; an airflow sensor, which generates an airflow signal representative of a measured airflow to the reformer; and a controller configured to receive the abovementioned signals. The controller performs the modeling and generates an estimate of the reformate composition, where the estimate is responsive to at least one of the reformer temperature signal, the fuel flow signal, and the airflow signal.

### BRIEF DESCRIPTION OF THE DRAWINGS

Referring now to the accompanying drawings, which are meant to be exemplary not limiting, and wherein like elements are numbered alike in the several figures.

Figure 1 is a simplified block diagram depicting a typical reformer and SOFC system of an auxiliary power unit.

Figure 2 depicts an embodiment with a reformer and SOFC system employing dynamic pressure controls.

Figure 3 is a high level block diagram depicting the reformer - SOFC model and system; and

Figure 4 depicts a block diagram of the reformer model.

### DESCRIPTION OF THE PREFERRED EMBODIMENT

Different types of SOFC systems exist, including tubular or planar systems. These various systems employ a variety of different cell configurations. Therefore, reference to a particular cell configuration and components for use within a particular cell configuration are intended to also represent similar components in other cell configurations where applicable.

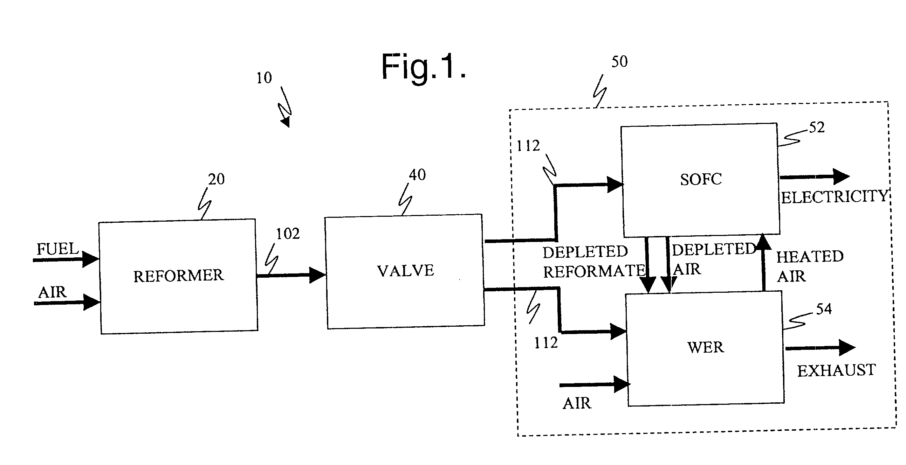

FIG. 1 depicts a portion of a typical power system 10 employing a combined SOFC/WER 50 and a reformer 20. The combined SOFC/WER 50 includes, but is not limited to, a SOFC 52, a WER 54 the necessary interfaces to the control valve 40, external interfaces for input and exhaust, and sensor interfaces. In addition, throughout this document references to electrochemical cell, fuel cell, and solid oxide fuel cell are intended to represent the same entity and hereafter are termed SOFC 52. Fuel is supplied to the reformer 20, and processed resulting in a reformate 102, which is supplied to the SOFC 52. The reformate 102 is typically metered and controlled via a fixed orifice or valve 40, which directs the flow of the reformate 102 to the SOFC 52 or the WER 54. Generally, power systems 10 may comprise at least one SOFC 52, a WER 54, an engine, and one or more heat exchangers. In addition, a power system 10 may include one or more compressors, an exhaust turbine, a catalytic converter, preheating device, an electrical source (e.g., battery, capacitor, motor/generator, or turbine), and conventional connections, wiring, control valves, and a multiplicity of electrical loads, including, but not limited to, lights, resistive heaters, blowers, air conditioning compressors, starter motors, traction motors, computer systems, radio/stereo systems, and a multiplicity of sensors and actuators, and the like, as well as conventional components. In addition, the SOFC 52 may also be electrically connected with other SOFC's or electrochemical cells.

To facilitate the production of electricity by the SOFC, a direct supply of simple fuel, e.g., hydrogen, carbon monoxide, and/or methane is preferred. However, concentrated supplies of these fuels are generally expensive and difficult to store and supply. Therefore, the fuel utilized may be obtained by processing of a more complex fuel. The actual fuel utilized in the system is typically chosen based upon the application, expense, availability, and environmental issues relating to a particular fuel. Possible fuels may include conventional fuels such as hydrocarbon fuels, including, but not limited to, conventional liquid fuels, such as gasoline, diesel, ethanol, methanol, kerosene, and others; conventional gaseous fuels, such as natural gas, propane, butane, and others; and alternative or "new" fuels, such as hydrogen, biofuels, dimethyl ether, and others; as well as combinations comprising at least one of the foregoing fuels. The preferred fuel is typically based upon the type of engine employed, with lighter fuels, i.e., those which can be more readily vaporized and/or conventional fuels which are readily available to consumers, generally preferred.

Furthermore, the fuel for the SOFC 52 or WER 54 may be processed in a reformer 20. A reformer 20 generally converts one type of fuel to another, more compatible with the SOFC 52 (e.g., hydrogen). Mainly, two types of reformer technologies are employed; steam reformers, which employ exothermic reaction, and partial oxidation reformers, which employ an endothermic reaction. Steam reformer technology is generally employed for converting methanol to hydrogen. Partial oxidation reformers are generally employed for converting gasoline to hydrogen. Typical design and utilization considerations for the reformers include rapid start, dynamic response time, fuel conversion efficiency, size, and weight.

The SOFC 50 and WER 54 may be used in conjunction with an engine, for example, to produce tractive power for a vehicle. Within the engine, SOFC effluent, air, and/or fuel are burned to produce energy, while the remainder of unburned fuel and reformed fuel is used as fuel in the SOFC 52 or WER 54. The engine may be any conventional combustion engine including, but not limited to, internal combustion engines such as spark ignited and compression ignited engines, including, but not limited to, variable compression engines.

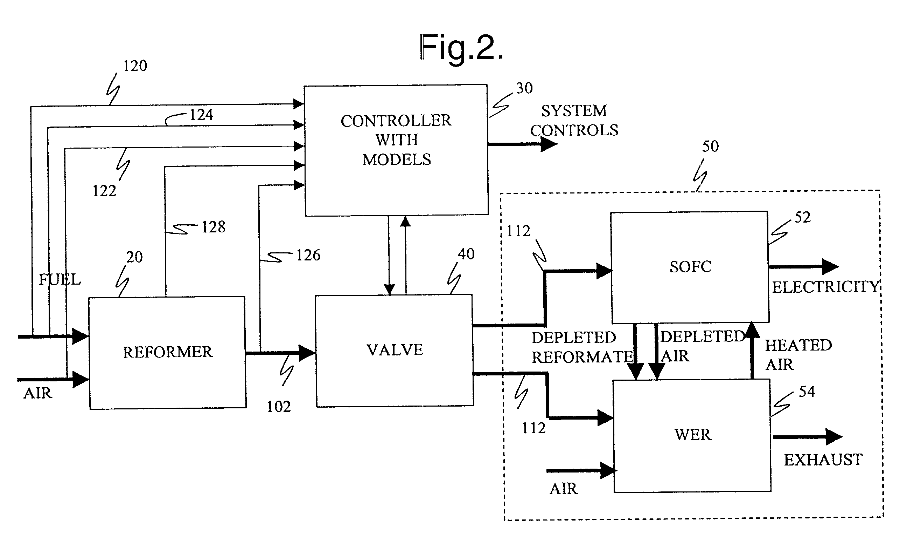

FIG. 2 depicts a block diagram of an embodiment as interposed in a power system 10. As stated earlier reformer 20 processes fuel generating a reformate 102. The reformate 102 flows to the SOFC 52 or WER 54 via a valve 40. The valve 40 is configured to receive a command from the controller 30 to direct the flow of reformate 102 to either the SOFC 52 or the WER 54.

In order to perform the prescribed functions and desired processing, as well as the computations therefore (e.g., the execution of pressure control algorithm(s), and the like), controller 30 may include, but not be limited to, a processor(s), computer(s), memory, storage, register(s), timing, interrupt(s), communication interfaces, and input/output signal interfaces, as well as combinations comprising at least one of the foregoing. For example, controller 30 may include signal input signal filtering to enable accurate sampling and conversion or acquisitions of such signals from communications interfaces. Additional features of controller 30 and certain processes therein are thoroughly discussed at a later point herein.

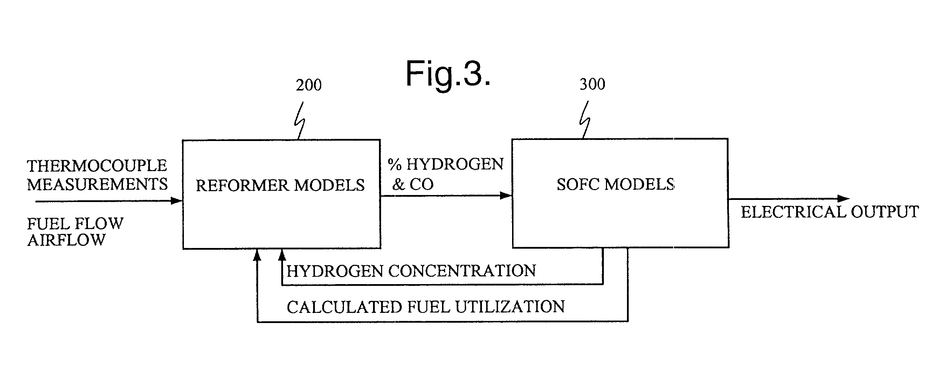

As is exemplified in the disclosed embodiment as depicted in FIGS. 2 and 3, one such process may be determining the composition of the reformate 102 by evaluating other system parameters. Controller 30 receives various input signals to facilitate the abovementioned processes and as a result may generate one or more output signals. The input signals may include, but not limited to: a fuel flow signal 120 representative of the fuel flow for the given operating conditions from a fuel flow sensor (sot shown); an airflow signal 122 from a mass air flow sensor (not shown), one or more reformer temperature signals representative of various temperatures of the reformer 20 at several locations. It is noteworthy to appreciate that the fuel flow signal 120 may represent a commanded, desired, or actual fuel flow namely dependent upon the placement and configuration of sensors. Likewise, it is also noteworthy to recognize that the airflow signal 122 may be actual airflow as measured or estimated based upon a measured airflow and including compensation for sensor dynamics. In addition to existing operational control of the power system 10, controller 30 exercises a model of system components. The model facilitates generation of an estimate of the composition of the reformate 102, which is subsequently utilized to control the air and fuel delivered to the reformer 20, thereby enhancing reformer 20 performance. For example, when the SOFC 52 requires lower than typical reformate flow conditions, it may be necessary to operate the reformer 20 under leaner (i.e., higher air to fuel ratio) than desirable operating conditions, to ensure that the necessary heat is developed. While this may not be the most efficient mode of operation for the reformer 20, the reformer 20 will be able to deliver the correct amount of hydrogen and carbon monoxide to the SOFC 52.

In an embodiment, mathematical models are utilized to generate an estimate of the quality of the reformate 102. Referring to FIG. 3 as well, a high-level block diagram of the model is depicted. The model include two sets of modeling algorithms that operate in cooperation to provide an estimate of the reformate composition. The first is associated with the reformer 20, while the later is associated with the SOFC 52. The reformer model 200 includes, but is not limited to, algorithms configured to calculate the reformate concentration based upon temperature input signals from various thermocouples, airflow signal 122 from mass air flow sensors and fuel flow signal 120. The SOFC model 300, on the other hand, includes, but is not limited to, algorithms that calculate an estimate of fuel utilization, and under certain conditions includes monitors of the hydrogen concentration at the output of the SOFC 52. Thereby, providing feedback for evaluation of the relative accuracy of the reformate composition estimate. For example, to refine the model during development or during calibration, the hydrogen concentration is measured to provide insight into the accuracy of the estimation process.

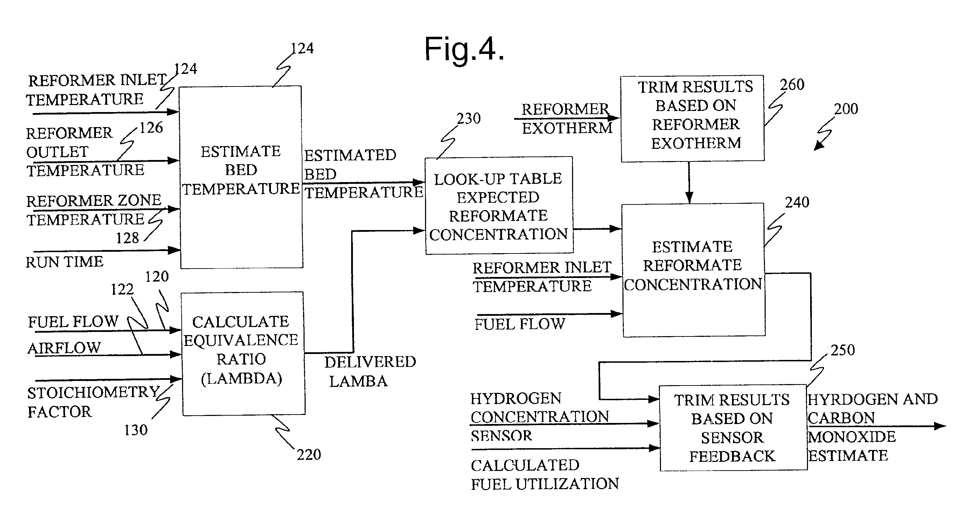

Turning now to FIG. 4, a depiction of further detail of the reformer model 200 is provided. In an embodiment, the reformer model 200 includes, but is not limited to, five basic processes, which in combination operate to generate an estimate of the composition of the reformate 102. The reformer model 200 may include an estimate bed temperature algorithm 210 configured to estimate the temperature of the bed of the reformer 20 from one or more temperature sensors (not shown). The bed temperature of the reformer 20 is a key indicator for evaluating the performance of the catalyst in the reformer. Typical temperature sensors include thermocouples, thermistors, thermostats, and the like, as well as combinations comprising at least one of the foregoing sensors, which when appropriately placed provide a calibratable signal proportional to the particular desired temperature. Such temperature measurement signals are also commonly linearized, compensated, and filtered as desired or necessary to enhance the characteristics or eliminate undesirable characteristics of the acquired signal. For example, the signals may be linearized to improve processing speed, or to address a large dynamic range of the signal. In addition, frequency or time based compensation and filtering may be employed to eliminate noise or avoid undesirable spectral characteristics. The estimate the bed temperature algorithm 210 utilizes the reformer outlet temperature signal 126 as a baseline for the temperature approximation. The approximation may be further refined utilizing the reformer inlet or mixing zone temperature signal hereafter termed inlet temperature signal 124, a reformer zone vicinity temperature signal 128 for the zone in the area of the reformer 20, and employing various filtering techniques. Filtering may be employed to enhance the robustness of the estimate or smooth response to load transients and may address eliminating undesirable characteristics such as noise, and offsets exhibited by the temperature signals.

The reformer model 200 may further comprise an algorithm configured to calculate the equivalence ratio (lambda) applied to the reformer as depicted at the calculate equivalence ratio algorithm 220. The calculation of (lambda) is achieved by utilizing the fuel flow signal 120 and the airflow signal 122 to establish a mass based air-fuel ratio. The air-fuel ratio is divided by a stoichiometry factor 130 for the fuel utilized. The resultant is then inverted to establish the equivalence ratio (lambda).

The estimated reformer bed temperature from 210 and the calculated equivalence ratio (lambda) from 220 may then be applied to a multidimensional look-up table 230. The resultant of the multidimensional look-up table is an expected reformate concentration, which provides the initial estimate of the reformate composition desired from the model. The multidimensional look-up table 230 is indexed by both the estimated reformer bed temperature and the calculated equivalence ratio (lambda) to generate the expected reformate concentration. For example, the expected percentage of hydrogen present in the reformate. The look up table resultant may then be adjusted as needed based upon reformer and system parameters to compensate for a broader range of operational characteristics.

Continuing with FIG. 4, at scheduling process 240 of the reformer model 200, the lookup table resultant is scheduled as a function of the reformer inlet temperature 124 and the fuel flow yielding a compensated estimate of the reformate concentration. The scheduling as a function of temperature addresses the consideration that the formation of air/fuel vapor and the homogeneity of the mixture may vary as a function of temperature and therefore, may, adversely affect the performance of the reformer 20. Likewise, fuel flow is also considered because as the fuel flow changes, the formation of the homogeneous mixture may be affected. Therefore, the scheduling of the estimated reformate concentration, while not necessary, enhances the performance of the reformer 20 over a wider variety of operational conditions. For example, where system operational requirements dictate the operation of the reformer 20 under less than ideal conditions such as low flow of the reformate. It will be further appreciated that such scheduling need lot be limited to the two parameters disclosed. It may be possible to schedule as a function of various system parameters including airflow, additional temperatures, other system parameters, and the like, as well as combinations thereof.

It will be appreciated that while the disclosed embodiments refer in several instances, to a configuration utilizing look-up tables in implementation, such a reference is illustrative only and not limiting. Various alternatives will be apparent to those skilled in the art. For example, the processes described above could employ, in addition to or in lieu of look-up tables, direct algorithms, gain or parameter scheduling, linearized interpolation or extrapolation, and/or various other methodologies, which may facilitate execution of the desired functions.

Another process depicted in FIG. 4 is the trimming of the compensated estimate of the reformate concentration generated at 240. The trimming process 260 schedules the estimate of reformate concentration as a function of the reformer exothermic reaction. In this instance, the trimming accounts for performance degradation of the reformer 20 over its operational life. The trim adjustment may typically be based upon the thermal response of the reformer to the reformate flow rate and equivalence ratio. For example, for a known fuel rate and equivalence ratio, an expected temperature change may be determined. Over time, a degradation of the reformer catalyst will result in a change in this exothermic reaction, which may be ascertained, and compensated for in the model.

The final process depicted in FIG. 4 is the optional calibration of the compensated estimate of the reformate concentration at 250. The calibration process 250 once again adjusts the estimate of reformate concentration. In this instance, the adjustment is applied namely during development to compensate the estimate for unmodeled responses and errors. The calibration adjustment may typically be based upon inputs from a developmental external hydrogen concentration sensor, and the fuel utilization.

The disclosed method may be embodied in the form of computer-implemented processes and apparatuses for practicing those processes. The method can also be embodied in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus capable of executing the method. The present method can also be embodied in the form of computer program code, for example, whether stored in a storage medium, loaded into and/or executed by a computer, or as data signal transmitted whether a modulated carrier wave or not, over some transmission medium, such as over electrical wiring or cabling, through fiber optics, or via electromagnetic radiation, wherein, when the computer program code is loaded into and executed by a computer, the computer becomes an apparatus capable of executing the method. When implemented on a general-purpose microprocessor, the computer program code segments configure the microprocessor to create specific logic circuits.

Therefore, the foregoing disclosure provides methodologies and systems for estimating the composition of reformate generated by a reformer and applied to an electrochemical cell. The estimation allows for elimination of potentially expensive sensors and processing for measuring the composition of the reformate and enhances the existing algorithms or methods utilized to control a reformer or electrochemical cell in a power system. The estimation also allows a power system to determine when the reformate quality is adequate for delivery to utilizing components (e.g., electrochemical cell), especially during transient conditions (e.g., startup and shut down). Moreover, the same methodologies may be applied to the evaluation of hot gases delivered to an engine, for example an internal combustion engine, which may be coupled to such a power system.

While preferred embodiments have been shown and described, various modifications and substitutions may be made thereto without departing from the spirit and scope of the invention. Accordingly, it is to be understood that the present invention has been described by way of illustration only, and such illustrations and embodiments as have been disclosed herein are not to be construed as limiting to the claims.

## Claims

1. A method for estimating a composition of a reformate (102) delivered to an electrochemical cell in an electric power system (10) comprising:
receiving a reformer temperature signal responsive to a reformer temperature;
receiving an airflow signal (122) responsive to an airflow to said reformer; and
estimating said composition of said reformate (102), said estimating responsive to at least one of said reformer temperature signal, said airflow signal (122) and a fuel flow signal (120).

2. The method of Claim 1 wherein said reformer temperature signal is representative of a reformer outlet temperature signal (126).

3. The method of Claim 2 wherein said reformer temperature signal is representative of a reformer inlet temperature signal (124).

4. The method of Claim 2 wherein said reformer temperature signal is representative of a reformer zone vicinity temperature signal (128).

5. The method of Claim 1 wherein said estimate of said composition is responsive to an estimated reformer bed temperature.

6. The method of Claim 5 wherein said estimated reformer bed temperature is responsive to said reformer temperature signal.

7. The method of Claim 6 wherein said reformer temperature signal is representative of a reformer outlet temperature signal (126).

8. The method of Claim 6 wherein said reformer temperature signal is representative of a reformer inlet temperature signal (124).

9. The method of Claim 6 wherein said reformer temperature signal is representative of a reformer zone vicinity temperature signal (128).

10. The method of Claim 6 wherein said reformer temperature signal is representative of a combination of said reformer outlet temperature signal (126), said reformer inlet temperature signal (124), and said reformer vicinity zone temperature signal (128).

11. The method of Claim 1 wherein said estimate of said composition is responsive to a calculated equivalence ratio.

12. The method of Claim 11 wherein said calculated equivalence ratio is responsive to a combination of said fuel flow signal (120), said airflow signal (122), and a stoichiometry factor (130).

13. The method of Claim 1 wherein said estimate of said composition is responsive to an expected reformate concentration generated by a multidimensional lookup table (230) indexed by an estimated reformer bed temperature and a calculated equivalence ratio.

14. The method of Claim 1 wherein said estimate of said composition is responsive to an expected reformate concentration scheduled as a function of a reformer inlet temperature signal (124) and said fuel flow signal (120).

15. The method of Claim 14 wherein said expected reformate concentration is scheduled to compensate for adverse effects on reformer (20) performance.

16. The method of Claim 1 wherein said estimate of said composition is responsive to a trim adjustment to compensate for reformer (20) degradation.

17. The method of Claim 16 wherein said trim adjustment comprises scaling said estimate of said composition based upon a scale factor responsive to a thermal response of said reformer (20) to a flow rate of said reformate (102) and an equivalence ratio.

18. The method of Claim 2 wherein said estimate of said composition is responsive to an estimated reformer bed temperature.

19. The method of Claim 18 wherein said estimate of said composition is responsive to a calculated equivalence ratio.

20. The method of Claim 19 wherein said calculated equivalence ratio is responsive to a combination of said fuel flow signal (120), said airflow signal (122), and a stoichiometry factor (130).

21. The method of Claim 20 wherein said estimate of said composition is responsive to an expected reformate concentration generated by a multidimensional lookup table (230) indexed by said estimated reformer bed temperature and said calculated equivalence ratio.

22. The method of Claim 21 wherein said estimate of said composition is responsive to said expected reformate concentration scheduled as a function of said reformer temperature signal and said fuel flow signal (120).

23. The method of Claim 1 wherein said estimate of said composition is responsive to a calibration adjustment.

24. A system (10) for estimating reformate (102) composition in an electric power system (10) comprising:
a reformer temperature sensor configured to measure a temperature in proximity to a reformer;
a fuel flow sensor disposed in a fuel supply to said reformer;
an airflow sensor disposed in an air supply to said reformer;
a controller (30) coupled to said reformer temperature sensor, said fuel flow sensor, and said airflow sensor;
wherein said controller (30) is configured to receive a reformer temperature signal from said reformer temperature sensor, a fuel flow signal (120) from said fuel flow sensor, and an airflow signal (122) from said airflow sensor; and
wherein said estimating is responsive to at least one of said reformer temperature signal, said fuel flow signal (120), and said airflow signal (122).

25. The system (10) of Claim 24 wherein said reformer temperature signal is representative of a reformer outlet temperature signal (126).

26. The system (10) of Claim 25 wherein said reformer temperature signal is representative of a reformer inlet temperature signal (124).

27. The system (10) of Claim 25 wherein said reformer temperature signal is representative of a reformer zone vicinity temperature signal (128).

28. The system (10) of Claim 24 wherein said estimating is responsive to an estimated reformer bed temperature.

29. The system (10) of Claim 28 wherein said estimated reformer bed temperature is responsive to said reformer temperature signal.

30. The system (10) of Claim 29 wherein said reformer temperature signal is representative of a reformer outlet temperature signal (126).

31. The system (10) of Claim 29 wherein said reformer temperature signal is representative of a reformer inlet temperature signal (124).

32. The system (10) of Claim 29 wherein said reformer temperature signal is representative of a reformer zone vicinity temperature signal (128).

33. The system (10) of Claim 29 wherein said reformer temperature signal is representative of a combination of said reformer outlet temperature signal (126), said reformer inlet temperature signal (124), and said reformer zone vicinity temperature signal (128).

34. The system (10) of Claim 24 wherein said estimating is responsive to a calculated equivalence ratio.

35. The system (10) of Claim 34 wherein said calculated equivalence ratio is responsive to a combination of said fuel flow signal (120), said airflow signal (122), and a stoichiometry factor (130).

36. The system (10) of Claim 24 wherein said estimating is responsive to an expected reformate concentration generated by a multidimensional lookup table (230) indexed by an estimated reformer bed temperature and a calculated equivalence ratio.

37. The system (10) of Claim 24 wherein said estimating is responsive to an expected reformate concentration scheduled as a function of an inlet temperature signal (124) and said fuel flow signal (120).

38. The system (10) of Claim 37 wherein said expected reformate concentration is scheduled to compensate for adverse effects on reformer (20) performance and enhance reformer (20) performance.

39. The system (10) of Claim 24 wherein said estimating is responsive to a trim adjustment to compensate for reformer (20) degradation.

40. The system (10) of Claim 39 wherein said trim adjustment comprises scaling said estimate of said composition based upon a scale factor responsive to a thermal response of said reformer (20) to a flow rate of said reformate (102) and an equivalence ratio.

41. The system (10) of Claim 25 wherein said estimating is responsive to an estimated reformer bed temperature.

42. The system (10) of Claim 41 wherein said estimating is responsive to a calculated equivalence ratio.

43. The system (10) of Claim 42 wherein said calculated equivalence ratio is responsive to a combination of said fuel flow signal (120), said airflow signal (122), and a stoichiometry factor (130).

44. The system (10) of Claim 43 wherein said estimating is responsive to an expected reformate concentration generated by a multidimensional lookup table (230) indexed by said estimated reformer bed temperature and said calculated equivalence ratio.

45. The system (10) of Claim 44 wherein said estimating is responsive to said expected reformate concentration scheduled as a function of said reformer temperature signal and said fuel flow signal (120).

46. The system (10) of Claim 24 wherein said estimating is responsive to a calibration adjustment.

47. A storage medium encoded with a machine-readable computer program code for estimating a composition of a reformate (102) delivered to an electrochemical cell in an electric power system (10), said storage medium including instructions for causing a computer to implement a method comprising:
receiving a reformer temperature signal responsive to a reformer temperature;
receiving an airflow signal (122) responsive to an airflow to said reformer; and
estimating said composition of said reformate (102), said estimating responsive to at least one of said reformer temperature signal, said airflow signal (122) and a fuel flow signal (120).

48. The storage medium of Claim 47 wherein said reformer temperature signal is representative of a reformer outlet temperature signal (126).

49. The storage medium of Claim 48 wherein said reformer temperature signal is representative of a reformer inlet temperature signal (124).

50. The storage medium of Claim 48 wherein said reformer temperature signal is representative of a reformer zone vicinity temperature signal (128).

51. The storage medium of Claim 47 wherein said estimate of said composition is responsive to an estimated reformer bed temperature.

52. The storage medium of Claim 47 wherein said estimate of said composition is responsive to a calculated equivalence ratio.

53. The storage medium of Claim 47 wherein said estimate of said composition is responsive to an expected reformate concentration generated by a multidimensional lookup table (230) indexed by an estimated reformer bed temperature and a calculated equivalence ratio.

54. The storage medium of Claim 47 wherein said estimate of said composition is responsive to an expected reformate concentration scheduled as a function of a reformer inlet temperature signal (124) and said fuel flow signal (120).

55. The storage medium of Claim 47 wherein said estimate of said composition is responsive to a trim adjustment to compensate for reformer (20) degradation.

56. The storage medium of Claim 48 wherein said estimate of said composition is responsive to an estimated reformer bed temperature.

57. A computer data signal for estimating a composition of a reformate (102) delivered to an electrochemical cell in an electric power, said computer data signal comprising code configured to cause a computer to implement a method comprising:
receiving a reformer temperature signal responsive to a reformer temperature;
receiving an airflow signal (122) responsive to an airflow to said reformer; and
estimating said composition of said reformate (102), said estimating responsive to at least one of said reformer temperature signal, said airflow signal (122) and a fuel flow signal (120).

58. The computer data signal of Claim 57 wherein said reformer temperature signal is representative of a reformer outlet temperature signal (126).

59. The computer data signal of Claim 58 wherein said reformer temperature signal is representative of a reformer inlet temperature signal (124).

60. The computer data signal of Claim 58 wherein said reformer temperature signal is representative of a reformer zone vicinity temperature signal (128).

61. The computer data signal of Claim 57 wherein said estimate of said composition is responsive to an estimated reformer bed temperature.

62. The computer data signal of Claim 57 wherein said estimate of said composition is responsive to a calculated equivalence ratio.

63. The computer data signal of Claim 57 wherein said estimate of said composition is responsive to an expected reformate concentration generated by a multidimensional lookup table (230) indexed by an estimated reformer bed temperature and a calculated equivalence ratio.

64. The computer data signal of Claim 57 wherein said estimate of said composition is responsive to an expected reformate concentration scheduled as a function of a reformer inlet temperature signal (124) and said fuel flow signal (120).

65. The computer data signal of Claim 57 wherein said estimate of said composition is responsive to a trim adjustment to compensate for reformer degradation.

66. The computer data signal of Claim 58 wherein said estimate of said composition is responsive to an estimated reformer bed temperature.
